(19) Europäisches Patentamt
European Patent Office
Office européen des brevets

(11) Veröffentlichungsnummer: **0 085 910**
**B1**

(12) # EUROPÄISCHE PATENTSCHRIFT

(45) Veröffentlichungstag der Patentschrift: **09.04.86**

(51) Int. Cl.[4]: **C 04 B 28/18**, C 04 B 41/00

(21) Anmeldenummer: **83100785.1**

(22) Anmeldetag: **28.01.83**

(54) **Verfahren zur karbonatischen Nachhärtung von Formkörpern aus hydrothermal erhärteten Kalkkieselsäuremassen.**

(30) Priorität: **05.02.82 DE 3203896**

(43) Veröffentlichungstag der Anmeldung:
**17.08.83 Patentblatt 83/33**

(45) Bekanntmachung des Hinweises auf die Patenterteilung:
**09.04.86 Patentblatt 86/15**

(84) Benannte Vertragsstaaten:
**AT BE CH FR GB IT LI NL SE**

(56) Entgegenhaltungen:
**DE - C - 302 635**
**FR - A - 1 368 228**

(73) Patentinhaber: **BT Baustoff + Transport GmbH + Co. KG, Meiner Strasse 4-6, D-3171 Abbesbüttel (DE)**

(72) Erfinder: **Boderke, Hubert, Dipl.-Ing., Wiesengrund 17, D-3305 Veltheim/Ohe (DE)**

(74) Vertreter: **Gralfs, Harro, Dipl.-Ing., Am Bürgerpark 8, D-3300 Braunschweig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 085 910 B1

LIBER, STOCKHOLM 1986

**Beschreibung**

Die Erfindung bezieht sich auf ein Verfahren zur karbonatischen Nachhärtung von Formkörpern aus hydrothermal erhärteten Kalkkieselsäuremassen nach dem Oberbegriff des Patentanspruches 1.

Typische Formkörper aus hydrothermal erhärteten Kalkkieselsäuremassen sind die bekannten Kalksandsteine.

Es ist bekannt, daß durch die Karbonatisierung durch Einwirkung vonn $CO_2$ wesentliche Verbesserungen der Druck- und Zugfestigkeit erzielt werden ("The cementing material in calcium silicate bricks", Trans ceram. soc. brit. (1933), 34, 14). Dabei ist es weiter bekannt, daß es möglich ist, durch Lagerung in $CO_2$-Atmosphäre das Gesamt-CaO durch $CO_2$ als $CaCO_3$ zu binden. Die vollständige Abbindung in $CO_2$-Atmosphäre soll hiernach in etwa 3 Monaten abgeschlossen sein. Eine Karbonatisierung durch Aufnahme des in der Luft enthaltenen $CO_2$ erfordert wesentlich längere Zeiträume. Sie kann sich abhängig von der jeweiligen CSH-Phase über Jahre und Jahrzehnte erstrecken. Dabei können sich insbesondere im ersten Jahr die Kristallgitter im Kalksandstein verändern und sogar verschiedene CSH-Phasen nacheinander durchlaufen, ohne daß dies im voraus bestimmt werden kann oder hierfür eine Gesetz-mäßigkeit angegeben werden kann.

Durch die Bindung des CaO im Kalksandstein durch Einwirkung von $CO_2$- entstehen stabile $CaCO_3$-$SiO_2$-Phasen, die formstabil sind und auch chemisch durch Umwelteinflüsse nur wenig veränderbar sind. Soweit im vorstehenden von Kalkkieselsäuremassen gesprochen wird, sollen hierunter nicht nur Gemische von CaO, $SiO_2$ und $H_2O$ verstanden werden, sondern auch solche Gemische, die Beimengungen von $Al_2O_3$ bzw. anderen üblichen Begleitmineralien enthalten. So ist es bekannt, daß die in der Kalksandsteinindustrie verwendeten $SiO_2$-haltigen Sande vielfach $Al_2O_3$ enthalten und daneben $Fe_2O_3$, $CaCO_3$ und $MgCO_3$ als Verunreinigungen enthalten können, die nicht in jedem Fall negativen Einfluß auf die Festigkeit des Kalksandsteins haben müssen.

Aus wirtschaftlichen Gründen kommt eine Lagerung in $CO_2$-Atmo-sphäre, die für längere Zeitdauer durchzuführen ist, nicht in Frage. In der industriellen Fertigung von Formkörpern, die aus Kalkkieselsäuremassen entweder in Formen gepreßt oder gegossen werden, hat eine erzwungene Karbonatisierung der Formkörper mit wirtschaftlich vertretbaren Behandlungszeiten und -mitteln, die zur Erreichung der oben erwähnten Verbesserungen an sich erwünscht wäre, noch keinen Eingang gefunden, obwohl eine Anzahl von Vorschlägen hierfür gemacht worden ist.

Es ist bekannt (Dissertation Gormann, 1968, Technische Universität Clausthal, Bundesrepublik Deutschland), während des Härtungsprozesses dem vorgespannten Dampf $CO_2$ zuzusetzen und im Härtekessel während der gesamten Härtezeit eine Mischatmosphäre von $H_2O/CO_2$ aufrechtzuerhalten. Die Einwirkung von $CO_2$ während der Bildung der CSH-Phase hat negative Auswirkungen. Nach einem weiteren Vorschlag soll während des Entspannens und der Abkühlung des Härtekessels $CO_2$-Gas in den Härtekessel eingespeist werden. Dieses Verfahren hat nur geringe Wirkung.

Es ist weiter bekannt (US-A-1 666 936), der Kalksandsteinmasse Kieselgur zuzusetzen und bei der hydrothermalen Behandlung eine Behandlung mit vorgespanntem Dampf mit einer Behandlung mit $CO_2$-haltigen Gasen abzuwechseln, wobei für solche Gase auch Abgase von Feuerungen vorgeschlagen werden. Eine besondere Einwirkung der $CO_2$-haltigen Gase auf die Formkörper im Sinne einer Verbesserung von deren Eigenschaften ist dabei nicht erwähnt.

Bekannt ist weiter (DE-C-302 635), kalkhydrathaltige Kunststeine mittels Kohlensäure zu erhärten. Es wird dabei davon ausgegangen, daß bei der bei der Karbonatisierung stattfindenden chemischen Reaktion Wasser gebildet wird, das die feinen Poren der Steine verstopft und der Kohlensäure den Zutritt ins Innere der Steine versperrt. Um dies zu vermeiden, wird vorgeschlagen, die Absorption der Kohlensäure nach bestimmten Verhältnissen in Abhängigkeit von der Temperatur der Steine durchzuführen. Dabei wird eine entsprechende Einstellung des $CO_2$-haltigen Gases, beispielsweise durch Beimischung von Luft oder dergleichen, vorgeschlagen. Das Verfahren soll dabei so durchgeführt werden, daß beispielsweise bei einer obersten Temperatur der Steine von 70 ° eine Kohlensäureabsorption von etwa 15,0 bis 24 % erreicht wird. Die Steine sollen dabei auf die Einwirkungstemperatur durch eine Heizvorrichtung erwärmt werden. Eine hydrothermale Härtung findet hier nicht statt.

Es ist weiter ein Verfahren zur Herstellung von Asbestzementprodukten bekannt (FR-A-1 368 228), bei dem neben Asbest künstlich hergestellte Mineralfasern als Füllstoffe verwendet werden sollen. Da freier Kalk die zugesetzte Zellulose und die künstlichen Mineralfasern angreifen, soll dieser in Kalziumkarbonat umgewandet werden, wobei gleichzeitig eine Erhöhung des Elastizitätsmoduls und der Biegefestigkeit erreicht werden soll. Die Umwandlung des freien Kalks in Kalziumkarbonat erfolgt hier mittels $CO_2$-haltiger Gase, die eine Temperatur von 15 bis 20°C haben sollen. Es ist dabei vorgeschlagen, diese Temperatur auf 80 °C anzuheben und spekulativ bis 150 °C. Eine Vorerwärmung ist hier nicht vorgesehen. Durch die stark exotherm verlaufende chemische Reaktion kann es jedoch ohne Zuführung äußerer Wärme zu einem Temperaturanstieg der Asbestzementprodukte bis auf 40 bis 120 °C kommen.

Ein eventueller positiver Einfluß auf die $CO_2$-Aufnahme ist nicht erwähnt.

Aufgabe der Erfindung ist es, ein Verfahren zur karbonatischen Nachhärtung der eingangs erwähnten Art dahingehend auszugestalten, daß es im industriellen Maßstab leicht ohne wesentliche Kostensteigerung und unter Erreichung einer so weitgehenden Karbonatisierung des im Formkörper enthaltenen CaO durchgeführt werden kann, daß wesentliche Verbesserungen der Festigkeitseigenschaften erreicht werden.

Diese Aufgabe wird gemäß der Erfindung gelöst durch die im kennzeichnenden Teil des Patentanspruches 1 herausgestellten Merkmale.

Mit dem beanspruchten Verfahren läßt sich bei geringen Kosten eine wesentliche Steigerung der Druckfestigkeit in üblicher Weise hergestellter Kalksandsteine erreichen Abgase von Kesselfeuerungen, wie sie in Kalksandsteinwerken vorhanden sind, haben einen $CO_2$-Gehalt, der bei öl - oder Gasfeuerung bei 13 % $CO_2$ liegt. Es können aber auch Abgase auf Kohlefeuerungen mit Entstaubungsanlagen verwendet werden.

Die Einwirkungszeit kann umso kürzer sein, je größer die Oberfläche des Kalkhydrats in der Masse ist. Sie sollte zweckmäßig im oberen Bereich der im Reaktor erzielbaren Kalkhydratoberfläche, d.h. im Bereich von 4000 bis 5000 Blaine ($cm^2/gr$) liegen, die bei weichgebrannten Kalken mit hohem CaO-Gehalt erreichbar sind. Es kann dabei auch wirtschaftlich sein, fabrikmäßig hergestelltes Kalkhydrat zu verwenden, das mit Oberflächen von 15000 Blaine und darüber angeboten wird und wegen der großen Oberfläche auch zu einer Verminderung des Kalkhydratanteiles in der Masse einsetzbar ist.

Um eine vollständige Karbonatisierung des CaO im Formkörper zu erreichen, ist es erforderlich, daß dieser möglichst weitgehend mit $CO_2$-haltigem Abgas durchflutet wird. Die hierfür erforderliche Behandlungszeit wird einmal herabgesetzt durch den oben erwähnten angehobenen Druck. Es kann jedoch auch zweckmäßig sein, die Gase vor der Behandlung zu komprimieren und das $CO_2$-haltige Gas mit erhöhter Geschwindigkeit einwirken zu lassen, wobei die Geschwindigkeit so gewählt werden sollte, daß die Strömung im Turbulenzbereich liegt. Zweckmäßig sind Strömungsgeschwindigkeiten in der Größenordnung von 140 - 190 m/sec. Gasgeschwindigkeiten bis 225 m/sec sind möglich.

Zweckmäßig ist es, für die Nachbehandlung einen gesonderten Tunnelofen bzw. Tunneltrockenofen vorzusehen, durch den das Abgas geleitet wird. Da normalerweise eine Nachbehandlungszeit von 30 bis 80 Minuten ausreicht, reicht ein Nachbehandlungsofen zur Nachbehandlung der Durchgangskapazität von sechs bis acht Härtekesseln aus. Kapazitätserhöhungen können leicht durch Verlängerungen und quasikontinuierlichen Durchlaufbetrieb des Nachbehandlungsofens erreicht werden. Es ist damit möglich, den Ausstoß von Kalksandsteinwerken mit sechs bis zwölf Härtekesseln in einem einzigen Nachbehandlungsofen nachzubehandeln. Der für das Verfahren erforderliche Investitionsaufwand ist im Hinblick auf die erzielbare Qualitätsverbesserung gering und in jedem Fall tragbar. Es fallen nur sehr geringe zusätzliche Energiekosten an, wenn die Nachbehandlung mit Abgasen durchgeführt wird.

Wie eingangs erwähnt, ist die vollständige Karbonatisierung des CaO in dem hydrothermal erhärteten Formkörper verbunden mit einer wesentlichen Steigerung der Druck- und Biegefestigkeit. Diese erhöhten Festigkeitswerte sind nicht in jedem Fall erforderlich, wenn Kalksandsteine lediglich die Anforderungen der bestehenden Normen erfüllen sollen. In diesem Fall kann der Vorteil der karbonatischen Nachhärtung dahingehend ausgenutzt werden, daß der CaO-Anteil in der $CaO$-$SiO_2$-$H_2O$-Masse herabgesetzt wird, wodurch Kosten einsparbar sind. Bei Kalksandsteinen kann darüber hinaus das heute zur Erreichung der geforderten Festigkeiten unerläß-liche Pressen zur Verdichtung der Kalkkieselsäuremasse unterbleiben. Es könnten damit Kalksandsteine, die den Festigkeitsanforderungen der bestehenden Normen entsprechen, auch durch Gießen hergestellt werden. Damit könnten wesentliche Verringerungen der Investitionen und des Energieeinsatzes erreicht werden.

Es wurden zwei Versuchssreihen durchgeführt, für die Kalksandsteine aus der normalen Produktion des Kalksandsteinwerkes Rimbach in D-6407 Schlitz 1 - Rimbach, Bundesrepublik Deutschland, verwendet wurden. Aus der normalen Produktion wurde ein Paket mit 840 Kalksandsteinen entnommen. Bei 400 unbehandelten Steinen wurde die Druckfestigkeit ermittelt. Diese lag in sehr engen Grenzen bei 20 $N/mm^2$. Mit den übrigen Steinen wurden zwei Versuchsreihen durchgeführt, und zwar in einem Ofen mit einer Aufnahmekapazität von 6 Steinen. Der Ofen war für eine Durchflutung mit $CO_2$-haltigem Gas ausgestattet. Der Ofen wurde drucklos betrieben. Die Einwirkungszeit des $CO_2$-haltigen Gases betrug jeweils 30 Minuten.

Es wurden in der ersten Versuchsreihe Versuche mit einer $CO_2$-Konzentration von 10 % bei Ofentemperaturen von 150, 200, 250, und 350 °C - Versuche A-D - durchgeführt. In der zweiten Versuchsreihe wurden mit einer $CO_2$-Konzentration von 15 % - Versuche E-J - Versuche bei Ofentemperaturen von 150, 200, 250, 300 und 350 °C durchgeführt.

Nach der Behandlung mit $CO_2$-haltigem Gas wurden jeweils für die Steine die Druckfestigkeit, der Gehalt an CaO in % sowie die Wasseraufnahme eines in Wasser getauchten Steins in Gewichtsprozent ermittelt.

Die Versuchsergebnisse sind in den Figuren 1 und 2 in zwei Diagrammen wiedergegeben. In diesen sind auf der Ordinate die Ofentemperaturen angegeben. Auf der Abszisse ist die Druckfestigkeit aufgetragen. Es ist weiter jeweils tabellarisch für die einzelnen Versuche das Minimum, Maximum und Mittel des CaO im

Stein in % angegeben sowie die Wasseraufnahme im Stein in Gewichtsprozenten.

Die Versuche zeigen, daß bei den Versuchen A-D im Mittel eine Steigerung der Druckfestigkeit um etwa 75 % erreicht wurde.

Das Diagramm der Versuche E - J mit einer $CO_2$-Konzentration von 15 % zeigt, daß hier die Druckfestigkeit im Mittel etwas höher liegt, und zwar um etwa 80 bis 85 % über der Druckfestigkeit der unbehandelten Steine.

Es ist zu erwarten, daß bei Verwendung eines $CO_2$-haltigen Gases unter Druck weitere Verbesserungen der Werte bzw. die Verbesserungen in kürzerer Zeit erreichbar sind.

Signifikante Erhöhungen der Festigkeit können weiter erreicht werden durch Zugabe von $Al_2O_3$ und $Fe_2O_3$ zu den Kalkkieselsäuremassen. $Al_2O_3$ und $Fe_2O_3$ sind dabei fein gemahlen zuzusetzen mit einer mittleren Korngröße von 100 µm, wobei die Korngröße überwiegend im Bereich zwischen 80 und 120 Vm liegt. $Al_2O_3$ und $Fe_2O_3$ können in Anteilen von 5 bis 15 % der Gesamtmasse zugesetzt werden, so daß der Anteil an $SiO_2$ auf alle Fälle größer als 70 % bleibt.

Von besonderem Vorteil ist das Verfahren auch bei der Herstellung von Kalksandstein-Leichtkörpern, beispielsweise hochporösen Dämmplatten, die aus Kalkkieselsäuremasse gegossen werden. Derartige hochporöse Dämmplatten mußten bisher nach der hydrothermalen Härtung zum Schutz der CSH-Phase(n) wasserabweisend imprägniert werden. Diese Imprägnierung beginnt bereits nach einem Zeitraum in der Größenordnung eines Jahres ihre Wirksamkeit zu verlieren. Durch eine Karbonstisierung in einem $CO_2$-haltigen Gas kann eine solche Oberflächenbehandlung entfallen, da das durch die Karbonatisierung gebildete $CaCO_3$ durch die Atmosphäre, insbesondere die Luftfeuchtigkeit, nicht angreifbar ist und derartige Platten eines besonderen Oberflächenschutzes nicht bedürfen.

Ein zweckmäßiges Verfahren zur Herstellung von Leichtkörpern geht aus von einem Gemisch von CaO und $SiO_2$, gegebenenfalls unter dem oben erwähnten Zusatz von $Al_2O_3$ und $Fe_2O_3$ in Flüssigphase (Schlamm). Die Bestandteile sollen dabei fein gemahlen vorliegen, etwa mit einer mittleren Korngröße von 90 µm. Diesem Gemisch werden Faserstoffe, wie Mineralwolle, Zellstoff oder dergleichen zugesetzt. Aus dem Gemisch werden dann die Formkörper gegossen, die anschließend in üblicher Weise im Härtekessel unter Druck und angehobener Temperatur gehärtet werden. Die gehärteten Körper werden anschließend karbonatisiert. Es hat sich dabei herausgestellt, daß es ausreicht, wenn eine Oberflächenschicht mit etwa 3 bis 4 mm vollständig karbonatisiert wird. Derartig hergestellte Leichtkörper haben gegenüber in üblicher Weise hergestellten Leichtkörpern eine wesentlich verringerte Wasseraufnahme. Es wird weiter eine wesentliche Erhöhung der Druckfestigkeit erzielt.

## Patentansprüche

1.Verfahren zur karbonatiscen Nachhärtung von Formkörpern aus hydrothermal erhärteten Kalkkieselsäuremassen durch Einwirkung von $CO_2$-haltigem Gas mit einem $CO_2$-Gehalt von wenigstens 10 % auf den erhärteten Formkörper, wobei die Formkörper und das Gas beide eine erhöhte Temperatur aufweisen, dadurch gekennzeichnet, daß die Formkörper nach Verlassen des Härtekessels mit einer Temperatur von wenigstens 100 °C mit Abgasen von Kesselfeuerungen beaufschlagt werden, deren Temperatur zwischen 150 °C und 400°C liegt bei einem Druck kleiner 2 bar, wobei die Behandlungsdauer 30 bis 60 Minuten beträgt.

2. Verfahren nach Anspruch 1, dadurch gekennzeichnet, daß die Formkörper in einem Tunnelofen mit den Abgasen beaufschlagt werden.

## Claims

1. Method for the carbonatising after-hardening of moulded bodies of hydrothermally hardened lime-silica masses by the action of $CO_2$-containing gas with a $CO_2$-content of at least 10 % on the hardened moulded body, both the moulded body as well as the gas having an increased temperature, characterised in that the moulded bodies after leaving the hardening vessel are treated at a temperature of at least 100 °C with waste gases from pressure of less than 2 bar and the time of treatment is between 30 and 60 minutes.

2. Method according to Claim 1, characterised in that the moulded bodies are treated with said waste gases in a tunnel furnace.

## Revendications

1. Procédé de traitement de durcissement complémentaire par carbonatation de produits moulés en matières silicocalcaires durcies hydrothermiquement, par action sur le produit moulé durci de gaz contenant du $CO_2$, ayant une teneur en $CO_2$ d'au moins 10%, le corps moulé et le gaz étant tous deux à une température élevée, caractérisé en ce qu'après avoir quitté l'autoclave de durcissement à une température d'au moins 100°C, le corps moulé est soumis à l'action de gaz de combustion de foyers de chaudierès dont la température est comprise entre 150°C et 400°C, avec une pression inférieure à 2 bars, la durée de traitement étant de 30 à 60 minutes.

2. Procédé selon la revendication 1, caractérisé en ce que les produits moulés sont soumis à l'action des gaz de combustion dans un four tunnel.

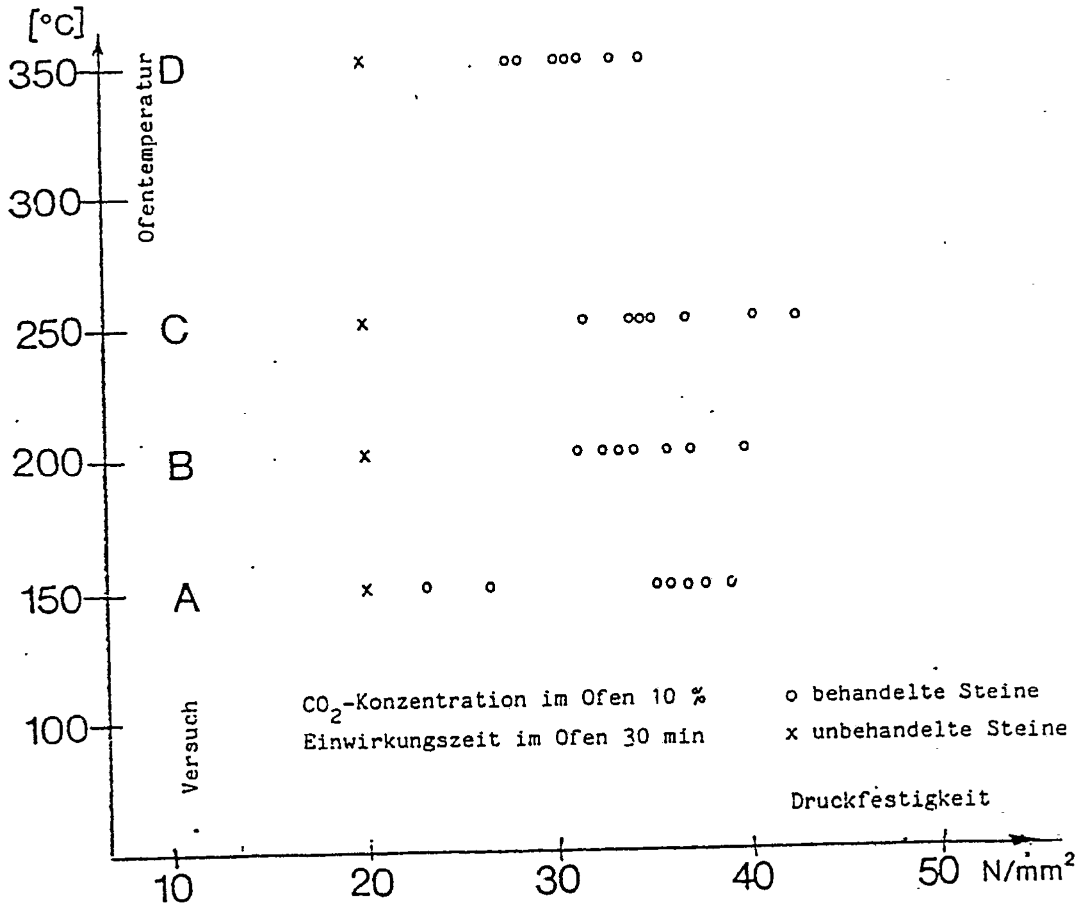


| | CaO in % | | Wasseraufnahme in % |
|---|---|---|---|
| D | min | 6,61 | 12,25 |
| | max | 7,47 | |
| | Ø | 7,13 | |
| C | min | 7,44 | 11,40 |
| | max | 7,72 | |
| | Ø | 7,56 | |
| B | min | 7,12 | 11,12 |
| | max | 7,56 | |
| | Ø | 7,32 | |
| A | min | 7,06 | 11,00 |
| | max | 7,56 | |
| | Ø | 7,30 | |

Fig. 1

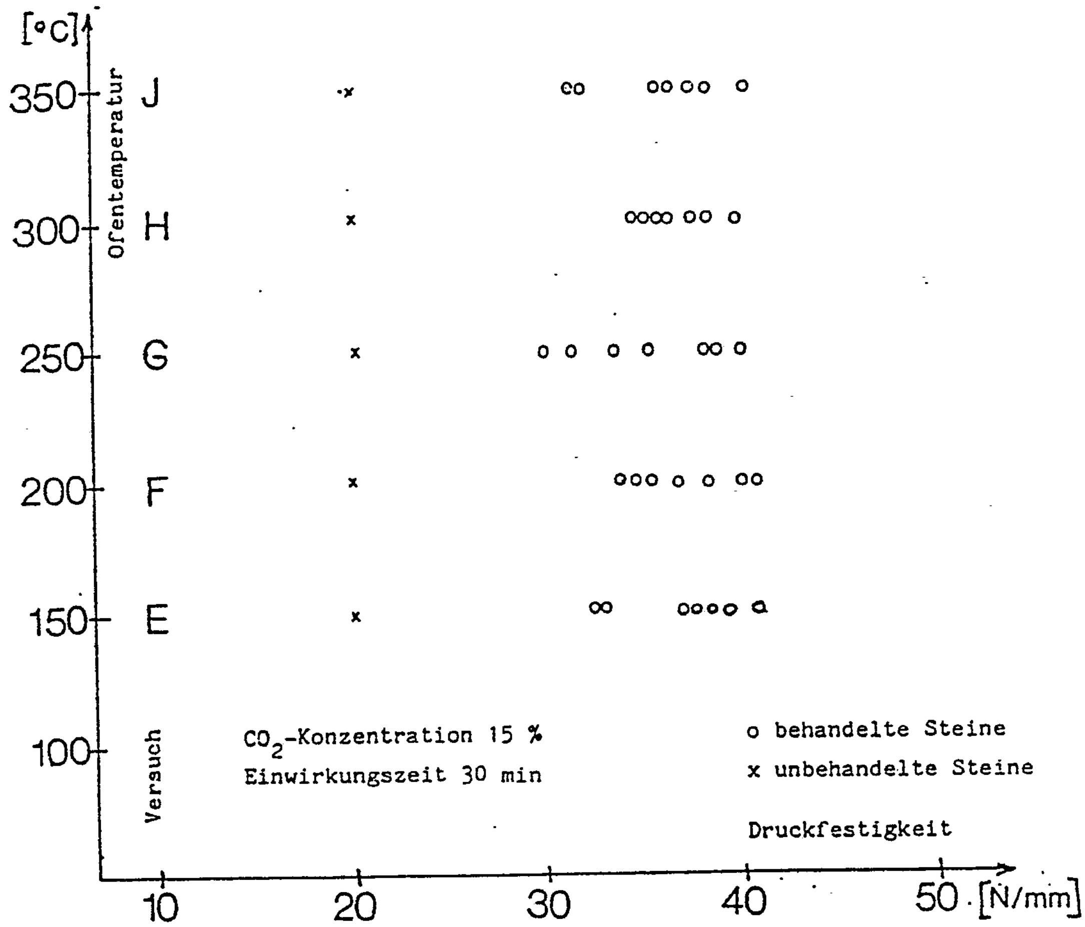


| | CaO in % | | Wasseraufnahme in % |
|---|---|---|---|
| | min | 8,43 | |
| J | max | 8,47 | 16,14 |
| | Ø | 8,45 | |
| | min | 8,23 | |
| H | max | 8,23 | 12,93 |
| | Ø | 8,23 | |
| | min | 8,37 | |
| G | max | 8,37 | 11,45 |
| | Ø | 8,37 | |
| | min | 8,51 | |
| F | max | 8,54 | 11,43 |
| | Ø | 8,53 | |
| | min | 6,83 | |
| E | max | 7,54 | 14,32 |
| | Ø | 7,14 | |

Fig. 2